# EUROPEAN PATENT APPLICATION

(11) **EP 4 800 898 A1**
(43) Date of publication of application: **02.09.2026**
(21) Application number: 24882105.0
(22) Date of filing: 01.10.2024
(51) Int. Cl.: H02K 21/22, H02K 21/14

(54) **POWER GENERATION DEVICE**

(30) Priority: 27.10.2023 JP 2023185104; 27.10.2023 JP 2023185105
(71) Applicant: Minebea Mitsumi Inc., Kitasaku-gun, Nagano 3890293 (JP)
(72) Inventor: OHMURA, Jun, Kitasaku-gun, Nagano 389-0293 (JP)
(74) Representative: Winter, Brandl - Partnerschaft mbB
(86) International application number: PCT/JP2024/035058
(87) International publication number: WO 2025/088988

(57) **Abstract**

A power generation device (10) includes: a bracket (33); a crankshaft (4) accommodated in the bracket (33); one or a plurality of bearings (32) rotatably supporting the crankshaft (4) to the bracket (33); and a stator (34) supported by the bracket (33). A magnet (311) is fixed to a side surface of the crankshaft (4).

## Description

### Technical Field

The present invention relates to a power generation device.

### Background Art

Patent Document 1 discloses a bottom bracket structure for a bicycle having a power generation mechanism. In this bottom bracket structure, a crankshaft is connected to a rotary part of the power generation mechanism via a planetary gear unit. The planetary gear unit allows the rotary part of the power generation mechanism to rotate at a higher speed than rotation of the crankshaft.

### Citation List

### Patent Literature

Patent Document 1: JP 2006-15987 A

### Summary of Invention

### Technical Problem

In the bottom bracket structure of Patent Document 1, the planetary gear unit and the power generation mechanism having a complicated configuration are incorporated in order to obtain sufficient power generation performance. Such a bottom bracket structure is costly due to the complicated structure. In addition, there is a concern about an increase in weight due to the incorporation of the planetary gear unit and the like.

An example of an object of the present invention is to provide a power generation device capable of generating electric power with a simple structure.

### Solution to Problem

A power generation device according to a first aspect of the present invention includes: a bracket; a crankshaft accommodated in the bracket; one or a plurality of bearings rotatably supporting the crankshaft to the bracket; and a stator supported by the bracket, in which a magnet is fixed to a side surface of the crankshaft.

A power generation device according to a second aspect of the present invention includes: a crank arm; a rotor fixed to the crank arm; a bracket; a stator fixed to the bracket; a bearing; and a crankshaft supported by the bracket via the bearing.

### Brief Description of Drawings

FIG. 1 is a perspective view schematically illustrating a structure of a crankset 1 having incorporated a power generation device according to a first embodiment of the present invention.
FIG. 2 is an exploded perspective view schematically illustrating the structure of the crankset 1 having incorporated the power generation device according to the first embodiment of the present invention.
FIG. 3 is a cross-sectional view taken along the line 3-3 in FIG. 1.
FIG. 4 is a cross-sectional perspective view of a bottom bracket 3 and a crankshaft 4 along the cross-section of FIG. 3.
FIG. 5 is an exploded perspective view of the bottom bracket 3 and the crankshaft 4.
FIG. 6 is a perspective view schematically illustrating a structure of a crankset 1A having incorporated a power generation device according to a second embodiment of the present invention.
FIG. 7 is an exploded perspective view schematically illustrating the structure of the crankset 1A having incorporated the power generation device according to the second embodiment of the present invention.
FIG. 8 is a cross-sectional view taken along the line 8-8 in FIG. 6.
FIG. 9 is a partially enlarged cross-sectional view of a part of the cross-sectional view of FIG. 8.
FIG. 10 is a cross-sectional view taken along the line 10-10 in FIG. 8.
FIG. 11 is a perspective view schematically illustrating a structure of a crankset 1B having incorporated a power generation device according to a third embodiment of the present invention.
FIG. 12 is an exploded perspective view schematically illustrating the structure of the crankset 1B having incorporated the power generation device according to the third embodiment of the present invention.
FIG. 13 is a cross-sectional view taken along the line 13-13 in FIG. 11.
FIG. 14 is a cross-sectional view taken along the line 14-14 in FIG. 13.

### Description of Embodiments

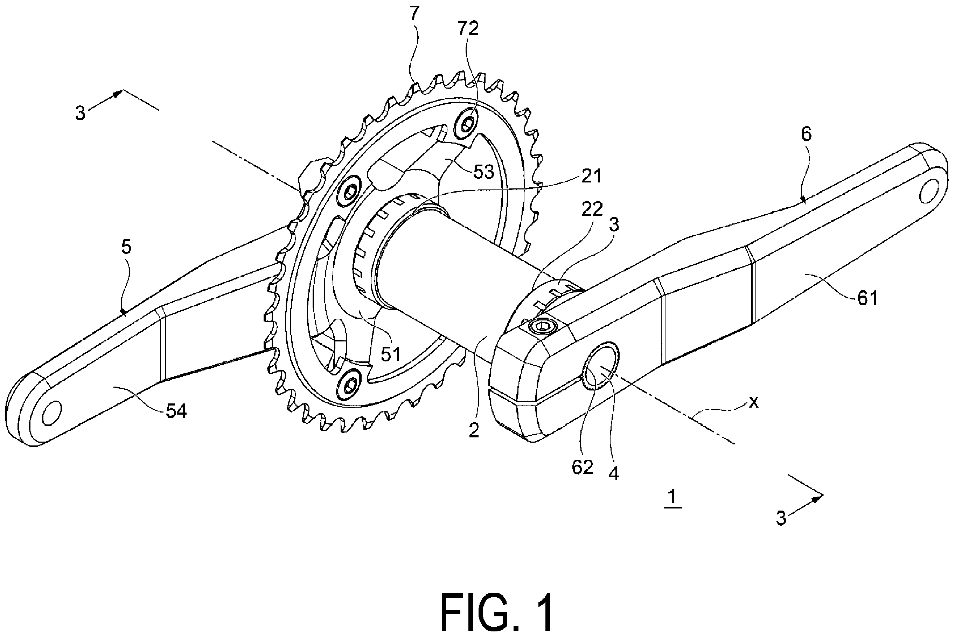

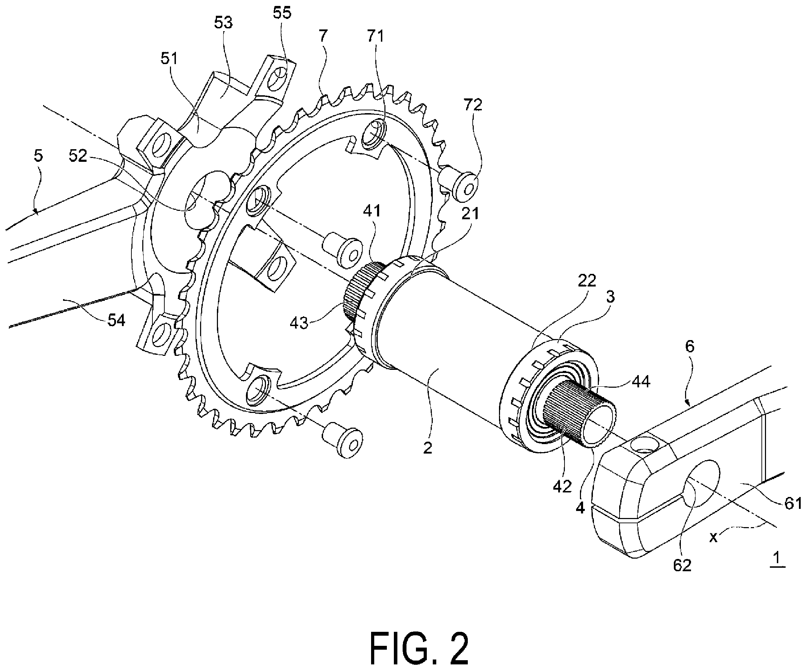

An embodiment of the present invention is described below with reference to the accompanying drawings. FIG. 1 is a perspective view schematically illustrating a structure of a crankset 1 having incorporated a power generation device according to a first embodiment of the present invention. FIG. 2 is an exploded perspective view schematically illustrating the structure of the crankset 1 having incorporated the power generation device according to the first embodiment of the present invention. The crankset 1 is mounted to a bottom bracket shell 2 of a frame of a bicycle, for example (including all types of bicycles such as road bikes, cross bikes, mountain bikes, and city cycles). Note that for the sake of simplicity, FIGS. 1 and 2 illustrate only the bottom bracket shell 2 defining a cylindrical internal space in the frame. Note that the bottom bracket shell 2 is illustrated as having a cylindrical outer shape, but is not limited to this shape and may have other shapes.

The crankset 1 includes a bottom bracket 3, a crankshaft 4, a right crank arm 5, a left crank arm 6, and a chain ring 7. The bottom bracket 3 is mounted at the bottom bracket shell 2. The internal space of the bottom bracket shell 2 is opened at circular openings 21 and 22. The crankshaft 4 is supported by the bottom bracket 3 to be rotatable about an axis x. Most of the crankshaft 4 is accommodated in the bottom bracket 3, and one end 41 and the other end 42 of the crankshaft 4 project from the bottom bracket 3 in a direction along the axis x (hereinafter, referred to as "rotation axis direction"). Note that the crankshaft 4, the right crank arm 5, and the left crank arm 6 are made of, for example, a metal material.

The right crank arm 5 includes a body 51, a hole formed at the body 51 along the axis x, that is, an attachment hole 52, a plurality of parts (hereinafter, referred to as "projecting parts") 53 projecting from the body 51 in a radial direction orthogonal to the axis x, and one arm body 54 similarly projecting from the body 51 in the radial direction. In this example, the chain ring 7 is attached at the inside of the body 51 in the rotation axis direction. In the attachment, a fastening component, that is, a bolt 72 is screwed into a hole formed at the projecting part 53, that is, a screw hole 55, through a hole formed at the chain ring 7, that is, a through hole 71. In this example, four screw holes 55 and four through holes 71 are formed at the right crank arm 5 and the chain ring 7, respectively, at predetermined angular intervals around the axis x.

As is clear from FIG. 2, for example, a sawtooth-shaped groove 43 is formed at the outer peripheral surface of the one end 41 of the crankshaft 4, while a sawtooth-shaped groove (not illustrated) is also formed at the inner peripheral surface of the attachment hole 52 of the right crank arm 5. The groove 43 and the groove of the attachment hole 52 extend parallel to the axis x. The groove 43 are fitted to each other, so that the right crank arm 5 is attached at the one end 41 of the crankshaft 4 so as not to be relatively rotatable. A mechanism (not illustrated) for preventing the crankshaft 4 from falling off the right crank arm 5 may be incorporated in the right crank arm 5. A pedal (not illustrated) is attached at a tip end of the arm body 54 extending from a base end connected to the body 51.

On the other hand, the left crank arm 6 has an arm body 61 and a hole formed at a base end of the arm body 61, that is, an attachment hole 62. At the outer peripheral surface of the other end 42 of the crankshaft 4, for example, a sawtooth-shaped groove 44 is formed, while at the inner peripheral surface of the attachment hole 62 of the left crank arm 6, a sawtooth-shaped groove (not illustrated) is also formed. The groove 44 extends parallel to the axis x. The groove 44 and the groove of the attachment hole 62 are fitted to each other, so that the left crank arm 6 is attached at the other end 42 of the crankshaft 4 so as not to be relatively rotatable. A mechanism (not illustrated) for preventing the crankshaft 4 from falling off the left crank arm 6 may be incorporated in the left crank arm 6. A pedal (not illustrated) is attached at a tip end of the arm body 61 extending from a base end where the attachment hole 62 is formed.

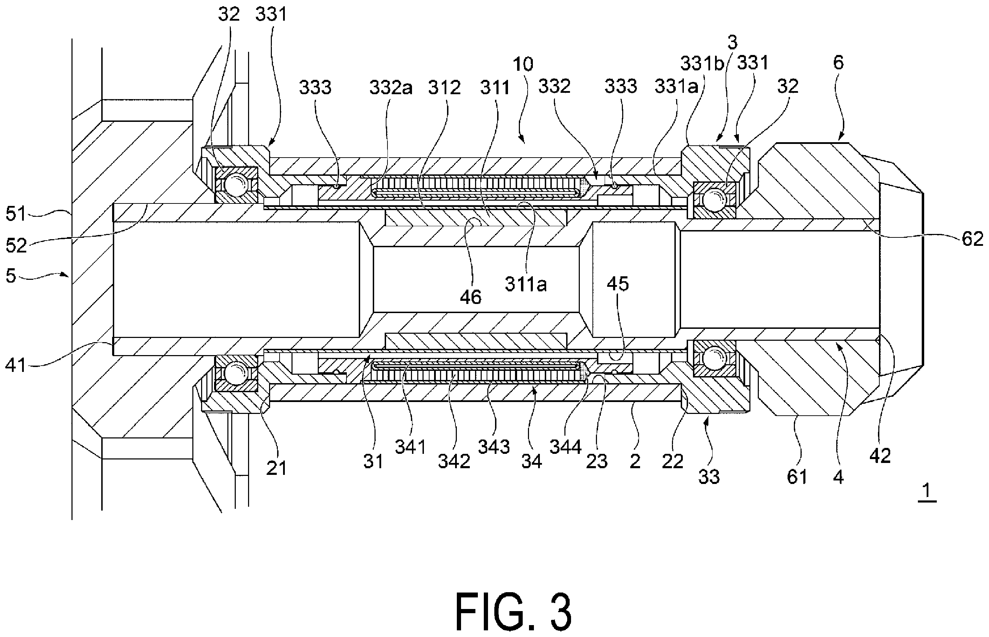

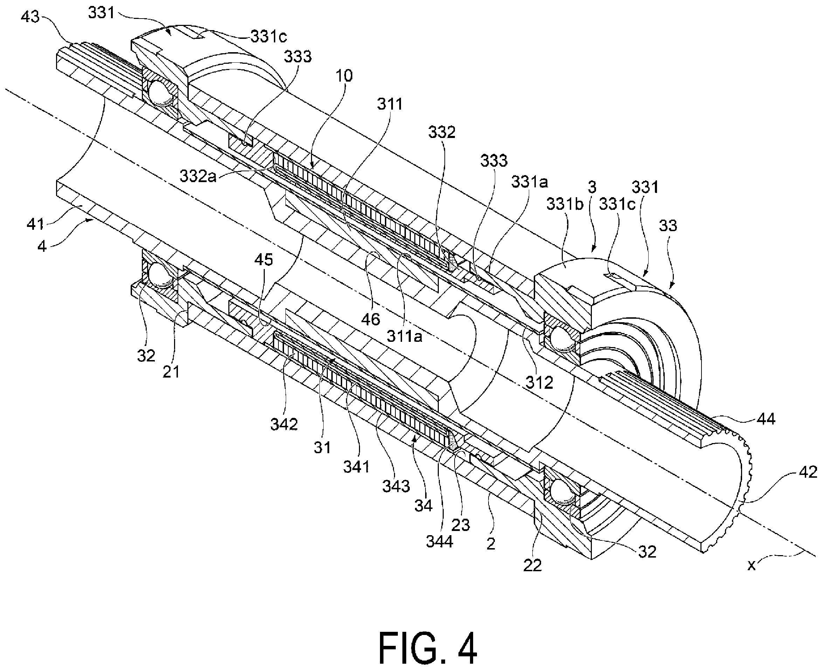

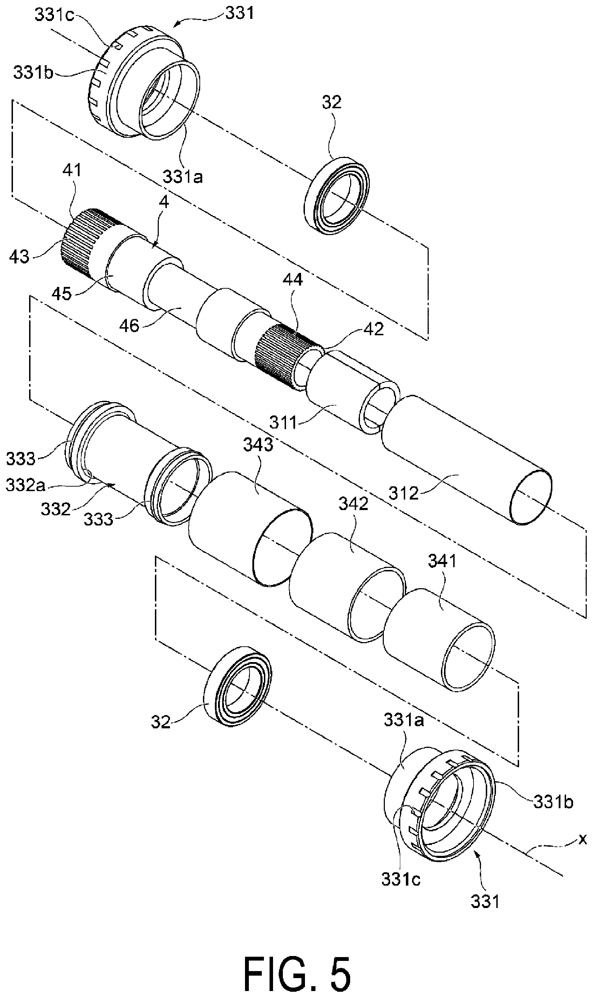

FIG. 3 is a cross-sectional view taken along the line 3-3 in FIG. 1. FIG. 4 is a cross-sectional perspective view of the bottom bracket 3 and the crankshaft 4 along the cross-section of FIG. 3. FIG. 5 is an exploded perspective view of the bottom bracket 3 and the crankshaft 4. Note that FIG. 5 omits illustration of the bottom bracket shell 2. Referring to FIGS. 3 to 5 together, the bottom bracket 3 has a rotor 31, one or a plurality of (two in this example) bearings 32 and 32, a bracket 33, and a stator 34. Each of the bearings 32 is, for example, a ball bearing. The rotor 31 is attached at the crankshaft 4, while the stator 34 is attached at the bracket 33. The two bearings 32 and 32 rotatably support the crankshaft 4 to the bottom bracket 3. That is, the bearings 32 and 32 rotatably support the rotor 31 relative to the bracket 33 and the stator 34.

The rotor 31 has a magnet 311 fixed to a cylindrical outer peripheral side surface 45 centered on the axis x of the crankshaft 4 described above. For example, an adhesive or the like is used for the fixing. The magnet 311 is, for example, a permanent magnet. The magnet 311 is formed in a cylindrical shape centered on the axis x as a whole. The magnet 311 is attached at the outer peripheral side surface 45 by combining, for example, two or more parts divided around the axis x. In this example, the magnet 311 is embedded at a recess 46 formed at the outer peripheral side surface 45 of the crankshaft 4. The recess 46 is recessed from the outer peripheral side surface 45 in an annular shape around the axis x.

In the radial direction, the outer diameter of a cylindrical outer peripheral side surface 311a of the magnet 311 centered on the axis x coincides with the outer diameter of the outer peripheral side surface 45 of the crankshaft 4. In the crankshaft 4, a part forming the recess 46 is formed to be thicker than the other part in the radial direction orthogonal to the axis x, but is not limited to this formation. The part forming the recess 46 may be thinner than the other part, or may have the same thickness. The outer peripheral side surface 45 of the crankshaft 4 is covered with a cylindrical cover 312 between a pair of bearings 32 and 32. The cover 312 can prevent the magnet 311 from falling off and ensure the axial strength of the crankshaft 4. The cover 312 is made of, for example, a resin material such as carbon fiber reinforced plastic (CFRP).

An inner ring of the bearing 32 is supported by the crankshaft 4. The inner ring of each bearing 32 is in contact with the right crank arm 5 or the left crank arm 6 in the rotation axis direction. The bracket 33 is attached at an outer ring of the bearing 32. The bracket 33 has a pair of outer peripheral-side sleeves (hereinafter, referred to as "outer peripheral sleeves") 331 and 331, and an inner peripheral-side sleeve (hereinafter, referred to as "inner peripheral sleeve") 332. The outer peripheral sleeves 331 and the inner peripheral sleeve 332 are both formed in a substantially cylindrical shape. The outer peripheral sleeves 331 and 331 are fixed to the openings 21 and 22 of the bottom bracket shell 2, respectively. Each outer peripheral sleeve 331 has a substantially cylindrical part (hereinafter, referred to as "fitting part") 331a to be fitted into an inner peripheral surface 23 of the bottom bracket shell 2, and a substantially cylindrical part (hereinafter, referred to as "flange part") 331b projecting from the fitting part 331a toward the outer peripheral side in the radial direction.

The fitting part 331a is formed in a substantially cylindrical shape about the axis x. A screw groove (not illustrated) is cut at an outer peripheral surface of the fitting part 331a. On the other hand, a screw groove (not illustrated) is also cut at the inner peripheral surface 23 of the bottom bracket shell 2 corresponding to the fitting part 331a. In this way, each outer peripheral sleeve 331 is attached at the bottom bracket shell 2 by screwing the fitting part 331a into the inner peripheral surface 23 of the bottom bracket shell 2. Respective flange parts 331b are disposed adjacent to the openings 21 and 22 outside the internal space of the bottom bracket shell 2. Outer rings of the bearings 32 are attached at the inner peripheral surfaces of the respective flange parts 331b by press-fitting, an adhesive, or the like.

At the outer peripheral surface of the flange part 331b, grooves 331c are formed at equal angular intervals around the axis x in parallel to the axis x (see FIGS. 4 and 5). In this example, a plurality of grooves 331c are disposed at equal intervals around the axis x. A tool (not illustrated) for removing the outer peripheral sleeve 331 from the bottom bracket shell 2 or attaching the outer peripheral sleeve 331 at the bottom bracket shell 2 is engaged with the grooves 331c. The bottom bracket 3 is fixed to the bottom bracket shell 2 by fastening the screw groove of the outer peripheral sleeve 331 to the screw groove of the bottom bracket shell 2. That is, the bottom bracket 3 is a screw-in type. However, instead of the screw-in type, a press-in type bottom bracket to be press-fitted into the bottom bracket shell 2 may be used. In this case, the grooves 331c, the screw groove, and the like of the outer peripheral sleeve 331 are not necessary.

In the rotation axis direction, end parts of the inner peripheral sleeve 332 are fitted to inner ends of a pair of outer peripheral sleeves 331. In this example, an outer peripheral surface of the inner peripheral sleeve 332 is fitted to the inner peripheral surface of the fitting part 331a of the outer peripheral sleeve 331. A sealing member 333 is sandwiched between the inner peripheral surface of the fitting part 331a and an outer peripheral surface of the inner peripheral sleeve 332. The sealing member 333 seals an internal space of the inner peripheral sleeve 332 from an external space. A recessed part 332a that is annularly recessed toward the inner peripheral side in the radial direction is formed at the outer peripheral surface of the inner peripheral sleeve 332. The stator 34 is supported at the recessed part 332a. In this example, the stator 34 has a tubular coil 341 of, for example, copper wire, a tubular yoke, that is, a stator core 342, and a stator housing 343.

The coil 341 is a so-called coreless coil, and is formed in an annular shape around the axis x as a whole while being wound in the rotation axis direction. The internal space wound around with the coil 341 is, for example, a cavity. The coil 341 is opposed to the magnet 311 in the radial direction with a predetermined magnetic gap. The coil 341 is surrounded by the cylindrical stator core 342 centered on the axis x. The stator core 342 surrounds the crankshaft 4. The stator core 342 is formed of a layered body of a plurality of annular silicon steel plates layered in the rotation axis direction. The stator housing 343 having a cylindrical shape and centered on the axis x is disposed at an outer peripheral surface of the stator core 342. In this example, the stator core 342 is attached at an inner peripheral surface of the stator housing 343. Note that in the recessed part 332a, an adhesive 344 is applied to the end parts of the coil 341 and the stator core 342 at the left crank arm 6 side.

At least the crankshaft 4, the rotor 31 (the magnet 311), the bearing 32, the bracket 33 (the outer peripheral sleeve 331 and the inner peripheral sleeve 332), and the stator 34 (the coil 341 and the stator core 342) described above constitute a power generation device 10 according to the present invention. The power generation device 10 may further have the cover 312, the stator housing 343, or the sealing member 333. In the power generation device 10, the stator 34, that is, the coil 341 and the stator core 342 are located between the two bearings 32 and 32 in the rotation axis direction. The outer diameter of the stator 34, that is, the stator housing 343 on the outer peripheral surface is set to be equal to or less than the outer diameter of the fitting part 331a of the outer peripheral sleeve 331 of the bracket 33 on the outer peripheral surface.

The power generation device 10 has a wiring line (not illustrated) formed by bundling a plurality of lead wires drawn from the coil 341. This wiring line is drawn out to the outside of the bottom bracket 3 from, for example, a through hole or a groove (not illustrated) formed at the bracket 33, and is electrically connected to, for example, an electronic device or the like mounted on a bicycle. Examples of the electronic device include a light, an electric shift, an electric brake, a cycle computer, and various sensors. The various sensors include a sensor capable of communicating with the cycle computer, for example, in accordance with predetermined wireless communication standards. The wiring line drawn out from each coil 341 may be connected to an electrical component such as a capacitor having a power storage function, for example.

When such a crankset 1 is incorporated in a bicycle, the right crank arm 5 and the left crank arm 6 are swung about the axis x by stepping on the pedals. As a result, the crankshaft 4 rotates about the axis x. This rotation causes the rotor 31 and the stator 34 to rotate relative to each other. As a result, electrical energy is generated at the coil 341 by the magnetic interaction between the magnet 311 and the coil 341. The electrical energy generated in this way is transmitted to electronic devices mounted on the bicycle through the wiring line. The electronic devices can be driven by this electric energy. Note that the electric energy generated by the power generation device 10 may be temporarily stored in a power storage device such as a capacitor.

In the crankset 1 as described above, the power generation device 10 is incorporated in the bottom bracket shell 2. Specifically, the rotor 31 is fixed to the outer peripheral side surface 45 of the crankshaft 4, and the stator 34 is fixed to the bracket 33 accommodating the crankshaft 4. Thus, the power generation device 10 can generate electric power with a simple structure. Since the power generation device 10 does not have such a complicated structure that the complicated structure may increase the weight, an increase in the weight due to incorporation of the power generation device 10 can also be suppressed. According to such a power generation device 10, a battery needs not be mounted at a bicycle. The burden of charging a battery is eliminated. In addition, when a battery has already been mounted, the weight of the battery itself can be reduced by reducing the capacity of the battery. Alternatively, the battery capacity may remain unchanged, and the electricity stored in the battery may be used exclusively for assisting, thereby increasing the cruising distance of the assisted bicycle.

Moreover, the coil 341 of the stator 34 is a so-called coreless coil, and is not wound around the stator core 342. As a result, the weight reduction of the stator 34 can be achieved. Moreover, the generation of cogging torque due to the magnetic interaction between the coil 341 and the magnet 311 can be suppressed. Since the magnet 311 is fixed at the recess 46 formed at the outer peripheral side surface 45 of the crankshaft 4, the outer diameter of the crankshaft 4 is the same as before. Further, the coil 341 and the stator core 342 are located between the two bearings 32 and 32, and the outer diameters of the coil 341 and the stator core 342 are set to be equal to or less than the outer diameter of the fitting part 331a of the outer peripheral sleeve 331. Accordingly, when the power generation device 10 is to be incorporated, the design change to the conventional bottom bracket shell 2 is unnecessary.

A situation where the above-described crankset 1 is mounted to the bottom bracket shell 2 is described below. First, the bottom bracket 3 is attached at the bottom bracket shell 2. Specifically, two outer peripheral sleeves 331 having attached the bearings 32 are fixed at the openings 21 and 22 of the bottom bracket shell 2, respectively. Note that the inner peripheral sleeve 332 having attached the stator 34 in advance is supported by one outer peripheral sleeve 331. Subsequently, the crankshaft 4 having attached the right crank arm 5 at the one end 41 in advance is attached at the inside of the bottom bracket 3 by insertion or the like. The chain ring 7 has already been attached at the right crank arm 5. Subsequently, the left crank arm 6 is attached at the other end 42 of the crankshaft 4. Thus, the crankset 1 is mounted to the bottom bracket shell 2.

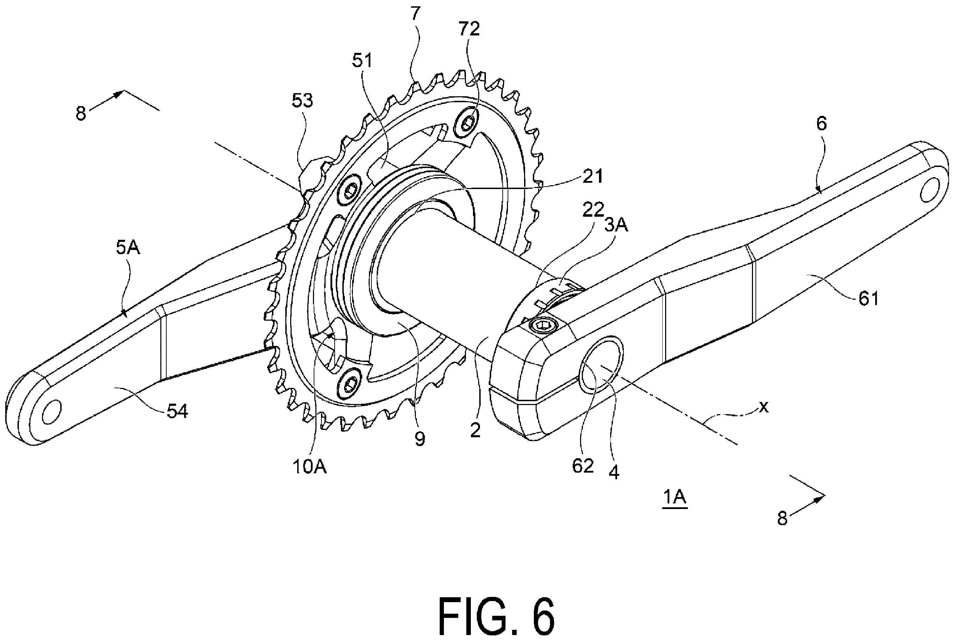

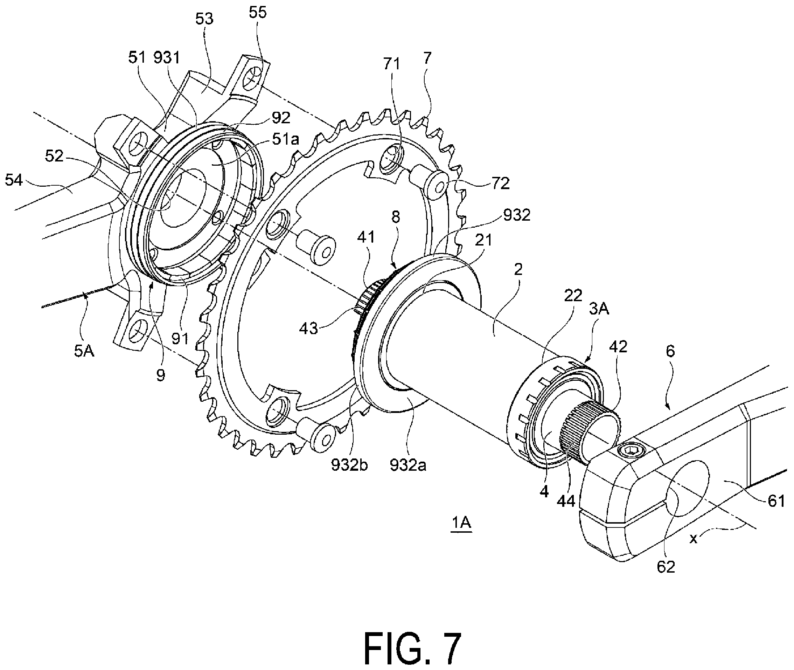

FIG. 6 is a perspective view schematically illustrating a structure of a crankset 1A having incorporated a power generation device according to a second embodiment of the present invention. FIG. 7 is an exploded perspective view schematically illustrating the structure of the crankset 1A having incorporated the power generation device according to the second embodiment of the present invention. The crankset 1A includes a bottom bracket 3A, a crankshaft 4, a right crank arm 5A, a left crank arm 6, and a chain ring 7. Compared to the above-described crankset 1, the structures of the bottom bracket 3A and the right crank arm 5A are different from the structures of the bottom bracket 3 and the right crank arm 5. The same reference signs are given to the similar components to the components of the crankset 1 of the first embodiment described above, and the redundant descriptions are omitted.

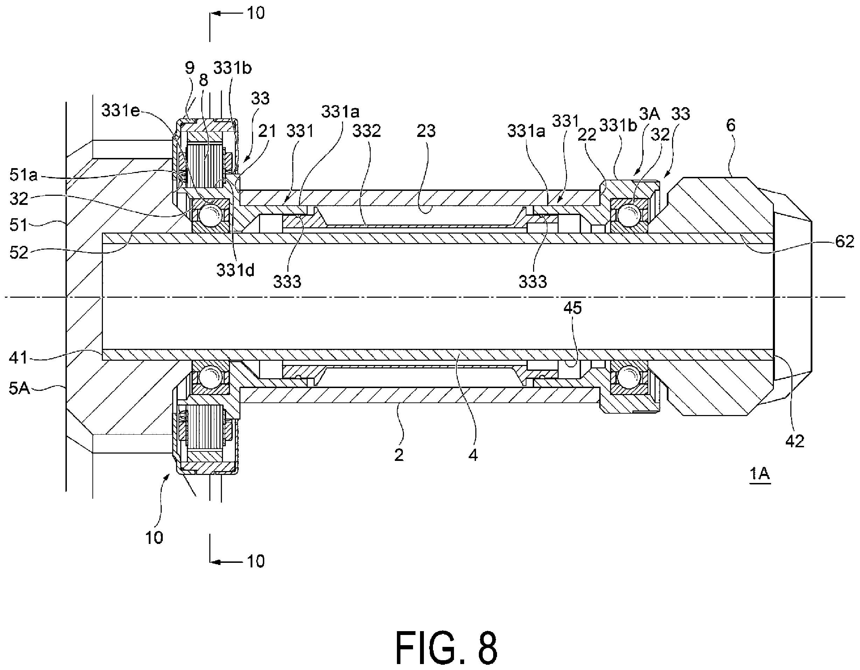

FIG. 8 is a cross-sectional view taken along the line 8-8 in FIG. 6. Referring to FIGS. 6 to 8 together, a stator 8 is fixed to the bottom bracket 3A adjacent to a body 51 of the right crank arm 5. Specifically, the stator 8 is fixed to an outer peripheral surface 331d of a flange part 331b of an outer peripheral sleeve 331 of the bottom bracket 3. The outer peripheral surface 331d is defined, for example, by a cylindrical surface centered on the axis x. The outer peripheral surface 331d is opposite to an inner peripheral surface 331e at a crankshaft 4 side. In this example, a side opposite to the crankshaft 4 side is defined as a right crank arm 5A side. That is, the stator 8 is fixed to the outer peripheral surface 331d at the right crank arm 5 side opposite to the crankshaft 4. On the other hand, bearings 32 are fixed to the inner peripheral surface 331e at the crankshaft 4 side opposite to the right crank arm 5A.

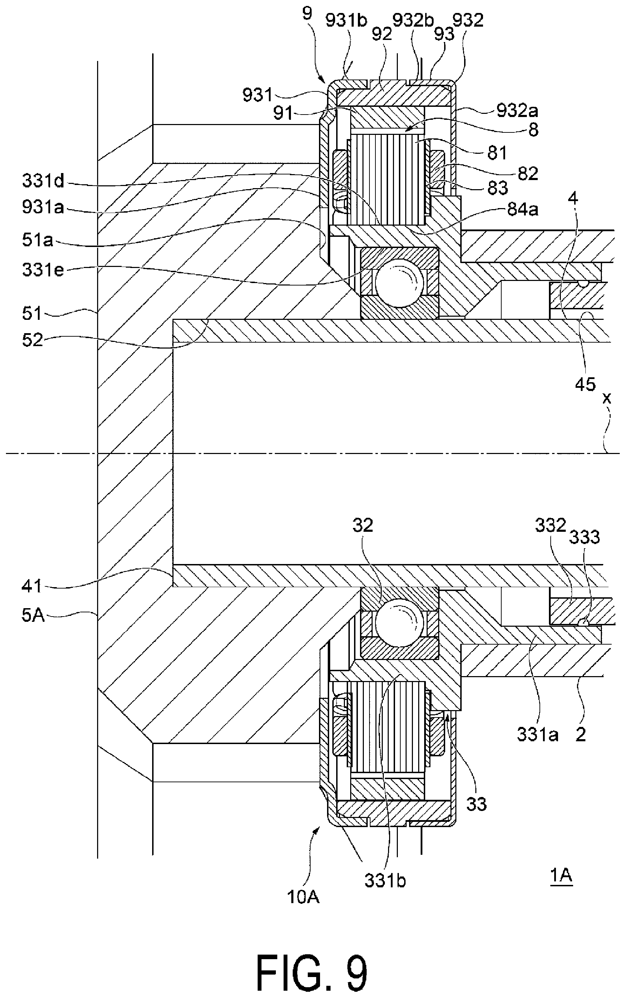

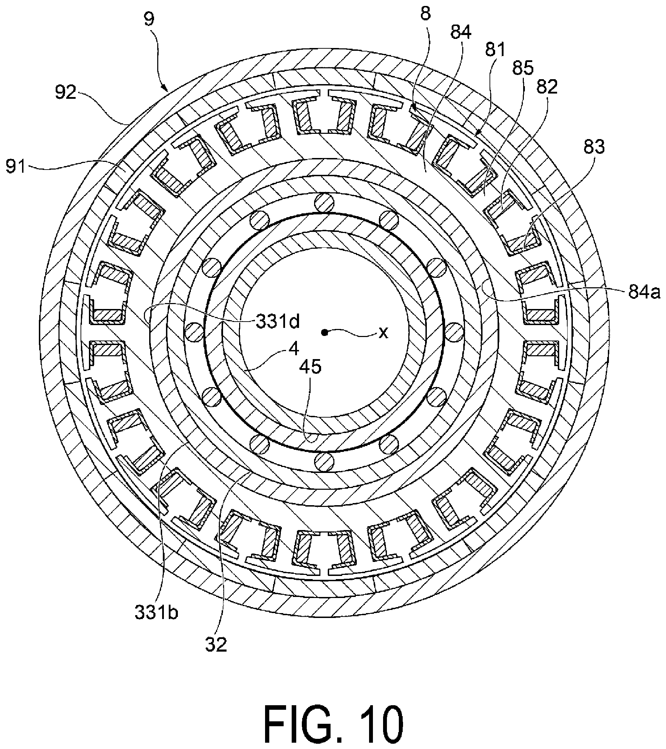

A rotor 9 is disposed to be opposed to the stator 8 in the radial direction orthogonal to the axis x. Specifically, as illustrated in FIGS. 7 and 8, the rotor 9 is fixed to one side surface of the body 51 of the right crank arm 5A at the crankshaft 4 side in the rotation axis direction, that is, an inner surface 51a. In this example, the inner surface 51a extends along, for example, a virtual plane orthogonal to the axis x. FIG. 9 is a partially enlarged cross-sectional view of a part of the cross-sectional view of FIG. 8. FIG. 10 is a cross-sectional view taken along the line 10-10 in FIG. 8. Note that FIG. 10 omits illustration of the right crank arm 5A and the chain ring 7 for the sake of simplicity. Referring to FIGS. 9 and 10 together, the stator 8 has a magnetic body, that is, a stator core 81, a coil 82, and an insulator 83.

The stator core 81 is formed of a layered body of a silicon steel plate being a magnetic body, and the like. The stator core 81 functions as a yoke of the stator 8. The stator core 81 has a cylindrical part (hereinafter, referred to as "cylinder part") 84 centered on the axis x, and a plurality of (for example, eighteen) teeth 85 extending from an outer peripheral surface of the cylinder part 84 to an outer peripheral side in the radial direction. The stator core 81 is attached at the outer peripheral surface 331d of the outer peripheral sleeve 331 at an inner peripheral surface 84a of the cylinder part 84. The coil 82 is wound around each of the teeth 85 to have a winding axis in the radial direction. The insulator 83 is disposed between the teeth 85 and the coil 82. The insulator 83 insulates the stator core 81 from the coil 82.

The rotor 9 opposed to the stator 8 in the radial direction has a magnet 91, a yoke 92, and a housing 93. The magnet 91 is a cylindrical permanent magnet centered on the axis x. The magnet 91 may be a single cylindrical permanent magnet, or may be formed in a cylindrical shape by connecting a plurality of permanent magnets in the circumferential direction. A cylindrical inner peripheral surface of the magnet 91 is opposed to the outer peripheral surface of the teeth 85 of the stator core 81 with a predetermined magnetic gap. The cylindrical outer peripheral surface of the magnet 91 is fixed to an inner peripheral surface of the yoke 92 having a substantially cylindrical shape and centered on the axis x, for example, by an adhesive or the like. The yoke 92 is made of a magnetic material, for example.

The housing 93 has a first housing 931 disposed at the right crank arm 5A side, and a second housing 932 disposed at a left crank arm 6 side. The first housing 931 and the second housing 932 are both formed in an annular shape. The first housing 931 has, for example, a flat plate part (hereinafter, referred to as "flat plate part") 931a extending annularly along the virtual plane orthogonal to the axis x, and a sidewall part (hereinafter, referred to as "sidewall part") 931b extending annularly from an outer peripheral end of the flat plate part 931a toward the second housing 932 along the axis x. The first housing 931 is fixed to the inner surface 51a of the body 51 at the flat plate part 931a. For example, fastening components (not illustrated) such as bolts are used for the fixing.

The second housing 932 has, for example, a flat plate part (hereinafter, referred to as "flat plate part") 932a extending annularly along the virtual plane orthogonal to the axis x, and a sidewall part (hereinafter, referred to as "sidewall part") 932b extending annularly from an outer peripheral end of the flat plate part 932a toward the first housing 931 along the axis x. The yoke 92 is fixed, at an outer peripheral surface of the yoke 92, to the inner peripheral surface of the sidewall part 931b of the first housing 931 and the inner peripheral surface of the sidewall part 932b of the second housing 932 by, for example, an adhesive or the like. Thus, the first housing 931 and the second housing 932 define, as a whole, an annular accommodation space for accommodating the above-described stator 8, for example.

At least the right crank arm 5A, the rotor 9, the bracket 33, the bearings 32, the stator 8, and the crankshaft 4 constitute a power generation device 10A according to the second embodiment of the present invention. The power generation device 10A has a wiring line (not illustrated) formed by bundling a plurality of lead wires drawn from the coil 82. This wiring line is electrically connected to an electronic device or the like mounted on a bicycle, for example. Examples of the electronic device include a light, an electric shift, an electric brake, a cycle computer, and various sensors. The various sensors include a sensor capable of communicating with the cycle computer, for example, in accordance with predetermined wireless communication standards. The wiring line drawn out from the coil 82 may be connected to an electrical component such as a capacitor having a power storage function, for example.

When such a crankset 1A is incorporated in a bicycle, the right crank arm 5A and the left crank arm 6 are swung about the axis x by stepping on the pedals. As a result, the crankshaft 4 rotates about the axis x. This rotation causes the stator 8 and the rotor 9 to rotate relative to each other. As a result, electrical energy is generated at the coil 82 by the magnetic interaction between the magnet 91 and the coil 82. The electrical energy generated in this way is transmitted to electronic devices mounted on the bicycle through the wiring line. The electronic devices can be driven by this electric energy. The electrical energy generated by the power generation device 10A may be temporarily stored in a power storage device such as a capacitor.

In the crankset 1A as described above, the power generation device 10A is incorporated adjacent to the bottom bracket shell 2. Specifically, the stator 8 and the rotor 9 are disposed adjacent to the inner surface 51a of the right crank arm 5A outside the bottom bracket 3A. The stator 8 is fixed to the bottom bracket 3A, while the rotor 9 is fixed to the right crank arm 5A. Thus, the power generation device 10A can generate electric power with a simple structure. Since the power generation device 10A does not have such a complicated structure that the complicated structure may increase the weight, an increase in the weight due to incorporation of the power generation device 10A can also be suppressed. According to such a power generation device 10A, a battery needs not be mounted on a bicycle. The burden of charging a battery is eliminated. In addition, when a battery has already been mounted, the weight of the battery itself can be reduced by reducing the capacity of the battery. Alternatively, the battery capacity may remain unchanged, and the electricity stored in the battery may be used exclusively for assisting, thereby increasing the cruising distance of the assisted bicycle.

A situation where the above-described crankset 1A is mounted to the bottom bracket shell 2 is described below. First, the bottom bracket 3A is attached at the bottom bracket shell 2. Specifically, the outer peripheral sleeve 331 at the right crank arm 5A side, having attached the bearing 32 and the stator 8, and the outer peripheral sleeve 331 at the left crank arm 6 side, having attached the bearing 32 and the sealing member 333, are fixed to the openings 21 and 22 of the bottom bracket shell 2, respectively. Note that an inner peripheral sleeve 332 is supported by one outer peripheral sleeve 331. Subsequently, the crankshaft 4 having attached the right crank arm 5A at the one end 41 in advance is attached at the inside of the bottom bracket 3A by insertion or the like. The chain ring 7, the first housing 931, the magnet 91, and the yoke 92 have already been attached at the right crank arm 5A. After the second housing 932 is attached at the yoke 92, the left crank arm 6 is attached at the other end 42 of the crankshaft 4. Thus, the crankset 1A is mounted to the bottom bracket shell 2.

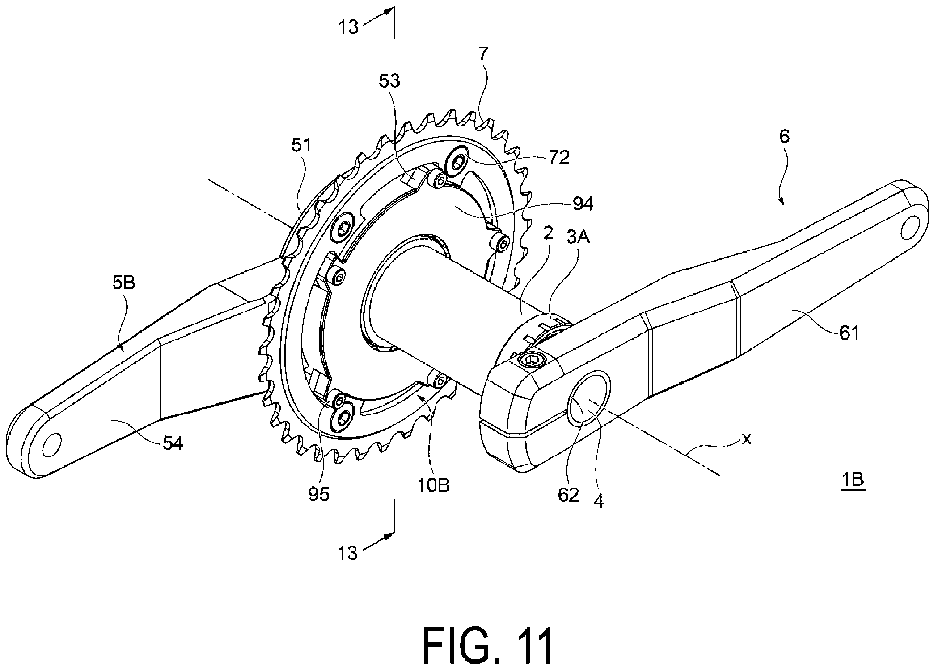

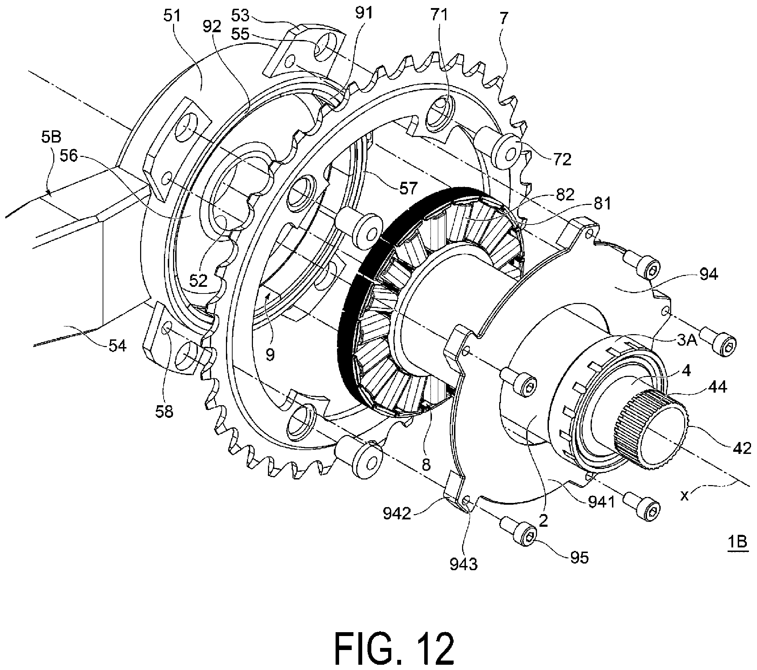

FIG. 11 is a perspective view schematically illustrating a structure of a crankset 1B having incorporated a power generation device according to a third embodiment of the present invention. FIG. 12 is an exploded perspective view schematically illustrating the structure of the crankset 1B having incorporated the power generation device according to the third embodiment of the present invention. Referring to FIGS. 11 and 12 together, the crankset 1B includes a bottom bracket 3A, a crankshaft 4, a right crank arm 5B, a left crank arm 6, and a chain ring 7. That is, compared to the above-described crankset 1A, the structure of the right crank arm 5B is different from the structure of the right crank arm 5A. The same reference signs are given to the similar components as the crankset 1A of the second embodiment described above, and the redundant descriptions are omitted.

Compared with the structure of the crank arm 5A according to the second embodiment, the housing 931 of the rotor 9 in the crankset 1 according to the second embodiment is integrally formed with the right crank arm 5B. As specifically illustrated in FIG. 12, a recess 56 for accommodating a stator 8 and a rotor 9 is formed at a body 51 of the right crank arm 5B. In this example, the recess 56 defines a flat cylindrical accommodation space centered on the axis x. A magnet 91 and a yoke 92 constituting the rotor 9 are fixed to an inner peripheral surface of a sidewall 57 of the body 51 forming the recess 56.

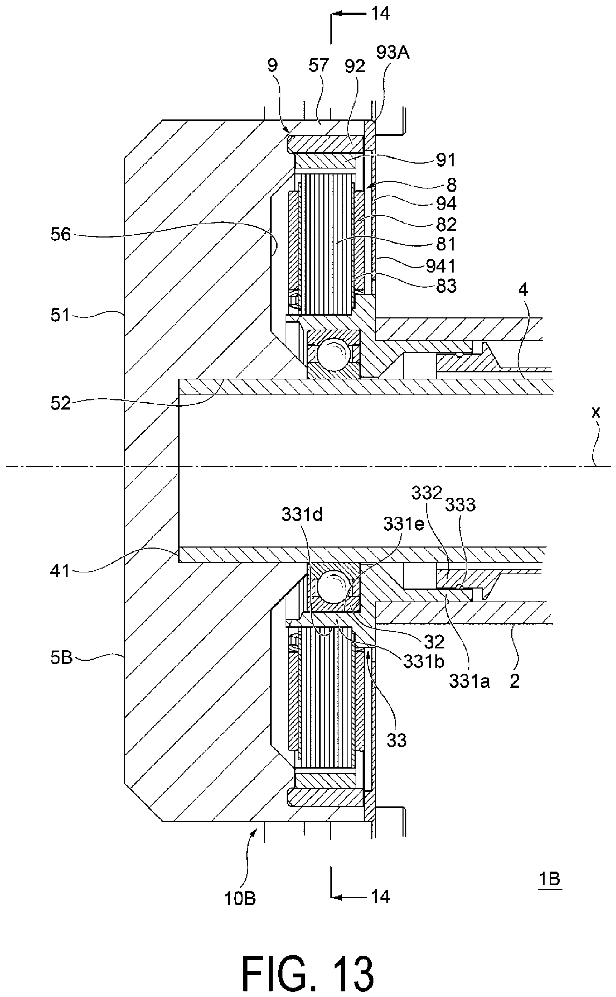

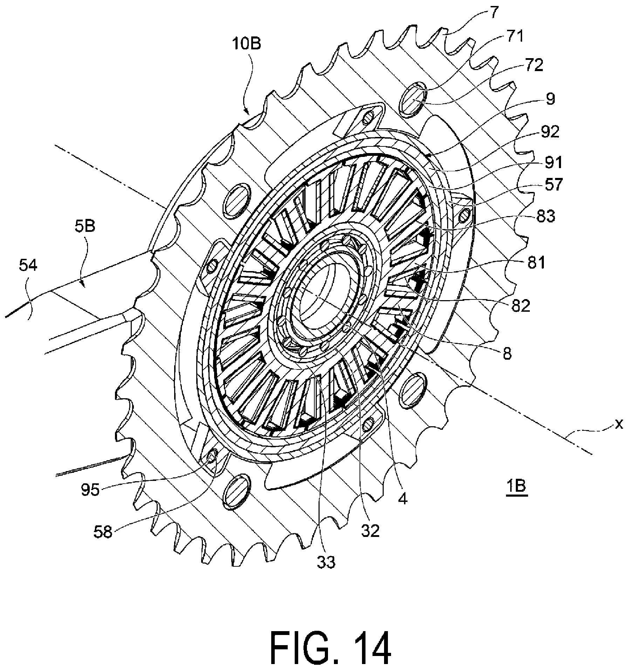

FIG. 13 is a cross-sectional view taken along the line 13-13 in FIG. 11. FIG. 14 is a cross-sectional view taken along the line 14-14 in FIG. 13. Referring to FIGS. 11 to 13 together, similarly to the second embodiment, the stator 8 is fixed to the outer peripheral surface 331d of the outer peripheral sleeve 331 of the bottom bracket 3A. The stator 8 has a stator core 81, a coil 82, and an insulator 83. A magnet 91 fixed to the sidewall 57 of the recess 56 of the body 51 is opposed to the stator 8 in the radial direction with a predetermined magnetic gap.

The rotor 9 has a housing 94 covering the recess 56. The housing 94 has an annular flat plate part (hereinafter, referred to as "flat plate part") 941 around the axis x, and projection parts 942 projecting in the radial direction from an outer peripheral edge of the flat plate part 941. In the projection part 942, a hole extending parallel to the axis x, that is, a through hole 943 is formed. A fastening component, that is, a bolt 95 is screwed into a hole formed at the projecting part 53 of the body 51, that is, a screw hole 58, through the through hole 943, so that the housing 94 is fixed to the right crank arm 5B. The flat plate part 941 of the housing 94 covers the recess 56 around the bottom bracket 3A.

At least the right crank arm 5B, the rotor 9, the bracket 33, the bearings 32, the stator 8, and the crankshaft 4 described above constitute a power generation device 10B according to the third embodiment of the present invention. In such a crankset 1B, the power generation device 10B is incorporated adjacent to the bottom bracket shell 2, similarly to the crankset 1A. Specifically, the stator 8 and the rotor 9 are disposed in the recess 56 of the right crank arm 5B outside the bottom bracket 3A. The stator 8 is fixed to the bottom bracket 3A, while the rotor 9 is fixed to the right crank arm 5B. Thus, the power generation device 10B can generate electric power with a simple structure.

A situation where the above-described crankset 1B is mounted to the bottom bracket shell 2 is described below. First, the bottom bracket 3A is attached at the bottom bracket shell 2. Specifically, the outer peripheral sleeve 331 at a right crank arm 5B side, having attached the bearing 32 and the stator 8, and the outer peripheral sleeve 331 at a left crank arm 6 side, having attached the bearing 32, are fixed to the openings 21 and 22 of the bottom bracket shell 2, respectively. Note that an inner peripheral sleeve 332 is supported by one outer peripheral sleeve 331. Subsequently, the crankshaft 4 having attached the right crank arm 5B at one end 41 in advance is attached at the inside of the bottom bracket 3A by insertion or the like. The chain ring 7, the magnet 91, and the yoke 92 have already been attached at the right crank arm 5B. After the housing 94 is attached at the right crank arm 5B, the left crank arm 6 is attached at the other end 42 of the crankshaft 4. Thus, the crankset 1B is mounted to the bottom bracket shell 2.

Although the present invention has been described through the above embodiments, the technical scope of the present invention is not limited to the scope described in the above embodiments. Various modifications or improvements can be made to the above embodiments, and this is obvious to a person having skill in the art. Such modified or improved form is also included in the technical scope of the present invention, and this is obvious from the description of the claims.

The above-described embodiments are intended to facilitate understanding of the present invention and are not intended to be construed as limiting. The components included in the above-described embodiments, arrangement, materials, conditions, shapes, sizes, or the like, of the components are not limited to those exemplified and may be appropriately changed. The components illustrated in the different embodiments can be replaced or combined partially to the extent not technically inconsistent.

### Reference Signs List

1, 1A, 1B Crankset, 2 Bottom bracket shell, 21 Opening, 22 Opening, 23 Inner peripheral surface, 3 Bottom bracket, 31 Rotor, 311 Magnet, 311a Outer peripheral side surface, 312 Cover, 32 Bearing, 33 Bracket, 331 Outer peripheral-side sleeve (outer peripheral sleeve), 331a Part to be fitted (fitting part), 331b Projection part (flange part), 331c Groove, 331d Outer peripheral surface, 331e Inner peripheral surface, 332 Inner peripheral-side sleeve (inner peripheral sleeve), 332a Recessed part, 333 Sealing member, 34 Stator, 341 Coil, 342 Yoke (stator core), 343 Stator housing, 344 Adhesive, 4 Crankshaft, 41 One end, 42 Other end, 43 Groove, 44 Groove, 45 Outer peripheral side surface, 46 Recess, 5 Right crank arm, 51 Body, 51a One side surface (inner surface), 52 Hole (attachment hole), 53 Projecting part (projecting part), 54 Arm body, 55 Hole (screw hole), 56 Recess, 57 Sidewall, 58 Hole (screw hole), 6 Left crank arm, 61 Arm body, 62 Hole (attachment hole), 7 Chain ring, 71 Hole (through hole), 72 Bolt, 8 Stator, 81 Magnetic body (stator core), 82 Coil, 83 Insulator, 84 Cylindrical part (cylinder part), 84a Inner peripheral surface, 85 Teeth, 9 Rotor, 91 Magnet, 92 Yoke, 93 Housing, 931 First housing, 931a Flat plate part (flat plate part), 931b Sidewall part (sidewall part), 932 Second housing, 932a Flat plate part (flat plate part), 932b Sidewall part (sidewall part), 94 Housing, 941 Flat plate part (flat plate part), 942 Projection part, 943 hole (through hole), 95 fastening component (bolt), 10, 10A, 10B Power generation device, x Axis

## Claims

1. A power generation device comprising:
a bracket;
a crankshaft accommodated in the bracket;
one or a plurality of bearings rotatably supporting the crankshaft to the bracket; and
a stator supported by the bracket,
wherein a magnet is fixed to a side surface of the crankshaft.

2. The power generation device according to claim 1, wherein the stator includes a tubular yoke surrounding the crankshaft, and a tubular coil surrounded by the yoke.

3. The power generation device according to claim 2, wherein the coil is formed by being wound in a rotation axis direction.

4. The power generation device according to any one of claims 1 to 3, wherein the magnet is fixed at an outer peripheral side surface of the crankshaft.

5. The power generation device according to any one of claims 1 to 3, wherein the magnet is fixed to a recess at the outer peripheral side surface of the crankshaft.

6. The power generation device according to any one of claims 1 to 5, comprising the plurality of bearings, wherein
the magnet and the stator are located between the plurality of bearings in the rotation axis direction.

7. A power generation device comprising:
a crank arm;
a rotor fixed to the crank arm;
a bracket;
a stator fixed to the bracket;
a bearing; and
a crankshaft supported by the bracket via the bearing.

8. The power generation device according to claim 7, wherein the rotor includes a magnet.

9. The power generation device according to claim 7 or 8, wherein the stator includes a magnetic body and a coil wound around the magnetic body.

10. The power generation device according to any one of claims 7 to 9, wherein the rotor is fixed to a surface of the crank arm at a side of the crankshaft.

11. The power generation device according to any one of claims 7 to 10, wherein the stator is fixed to a surface of the bracket at a side of the crank arm.

12. The power generation device according to any one of claims 7 to 11, wherein the bearing is fixed to a surface of the bracket at a side of the crankshaft.
